# EUROPEAN PATENT SPECIFICATION

(11) **EP 3 698 060 B1**
(45) Date of publication and mention of the grant of the patent: **09.02.2022**
(21) Application number: 18845481.3
(22) Date of filing: 17.10.2018
(51) Int. Cl.: F16C 33/10, F16C 35/02, F01D 25/16, F16C 35/067

(54) **A TURBO BEARING SYSTEM**
LAGERSYSTEM FÜR EINEN TURBOLADER
SYSTÈME DE PALIER POUR UNE MACHINE TURBO

(30) Priority: 18.10.2017 TR 201716000
(43) Date of publication of application: 26.08.2020
(73) Proprietor: Supsan Motor Supaplari Sanayii Ve Ticaret A.S., Küçükçekmece, Istanbul (TR)
(72) Inventor: KAYABASI, Iskender, Atasehir/Istanbul (TR); ALPAYA, Mert, Sisli/Istanbul (TR); HAMPARYAN, Burag, Küçükçekmece/Istanbul (TR); ÇAKIL, Semih, Akyurt/Ankara (TR); TEMIZ, Vedat, Beyoglu/Istanbul (TR); DOGRU, Ridvan, Atasehir/Istanbul (TR)
(86) International application number: PCT/TR2018/050602
(87) International publication number: WO 2019/078802

(56) References cited:
- EP-A2- 2 706 197
- CN-A- 104 930 052
- DE-A1-102012 206 304
- DE-A1-102016 220 460
- US-A1- 2013 309 072
- US-A1- 2015 192 066

## Description

### TECHNICAL FIELD

The invention is related to a turbo system that enables increasing combustion efficiency and hence the motor power by delivering higher amounts of compressed air into the combustion chamber in internal combustion engines.

Specifically, the invention is related to the turbo bearing that increases efficiency and power obtained from engines having a small cylinder volume that has lower cost, that is a single-piece component and that can bear axial loads.

### PRIOR ART

Turbo systems are rotating devices that increase combustion performance by delivering efficient compressed air into the combustion chamber in internal combustion engines. A turbo is generally driven by a turbine and the turbine and the suction impeller are connected to each other by a shaft. By driving the turbine, the suction impeller sucks the air, compresses it and discharges into the combustion chamber. So, power obtained by combustion with this oxygen-rich compressed air is increased. Thus, in internal combustion engines, higher powers can be obtained by consuming less energy.

The turbines present within the turbo charge systems used today are rotated by the exhaust gas released from the internal combustion engine after combustion. In super charge systems that operate by similar methods, the air is compressed by the drive received from the engine shaft instead of the turbo turbine.

The most significant advantage of the turbo charge systems is that the energy loss is minimal while rotating the turbo turbine and that they can be easily applicable to engines with small cylinder volumes.

Modern turbos used in the automotive industry may reach up to 250.000 rpm. In such cases, the importance of bearing comes into play in order to avoid damage to the turbo shaft due to extensive friction. Turbo bearing systems usually comprise of journal bearings made of bronze material and axial thrust bearings. It is of critical importance that the high-speed rotating parts operate without contacting any cover on the turbo body.

In the current turbos, the film layer is formed by the film forming holes on the journal bearing and/or the grooves located inside the bearing and the friction inside the bearing is minimized by said film layer.

Turbo bearing systems can be divided into two, which are Rotating Floating Ring Bearing (RFRB) and Semi Floating Ring Bearing (SFRB). In RFRB systems, two films are formed which are between the central turbo body and the bearing and between the bearing and the shaft.

In SFRB systems, similarly, there is only one hydrodynamic oil film only between the shaft and the bearing and this enables a better control of the rotor assembly. The external oil film formed in these systems is used for damping purposes.

The RFRB turbos that are usually implemented to small power engines in the market basically comprise two shaft bearings (journal bearings), one spacer, one axial thrust ring, and one axial thrust bearing. In SFRB turbos used in engines with more power, the bearing is provided by a single-piece structure.

In PCT document No.WO2007005478, a type of turbocharge bearing and related components are described. Said bearing comprises holes on its outer side that enable oil film formation. While said holes are effective in oil film formation, they can't make sure the turbo efficiency is sufficient at high rotational speeds.

In EPO document No.EP1002185, a kind of integrated bearing system is described. The bearing has a recessed structure that enables internal oil film formation. Moreover, said bearing also includes a groove structure which enables lubrication at the axial thrust bearing part. In the context of said embodiment, it is specifically suitable for small volume engines, but not for high-speed turbos.

As USPTO patent document which has US20130309072A1 publication number, mentioned a bearing, spacer and housing which has multiple rotating elements as bearing ball as located between inner race and outer race. Invention also has radial oil inlets for feeding inner race with oil. Invention does not has disclose any oil filming structure.

In Turkish Patent and Trademark Foundation patent document No.TR201715924, a type of single-piece turbo bearing is described. Said turbo bearing bears the axial loads acting on the turbo bearing by internal channels thereof and it provides ease of production and assembly by its single-piece turbo body structure. However, in accordance with the lubrication system of the turbo, it comprises oil grooves suitable with the radial film forming holes contained within the bearing of the turbo turbo body. Specifically, the oil groove which enables transfer of oil to the film forming holes on the turbine side is machined on the turbo turbo body by a drill from the compressor side. Said process extends the production process performed on the turbo turbo body and increases production cost. Thus, there exists a need for bringing a novelty for turbo bearing and turbo body structure in said product.

Consequently, all the problems mentioned above make it necessary to bring a novelty in the related field.

### OBJECT OF THE INVENTION

The present invention makes it necessary to solve the abovementioned problems and bring a technical novelty in the related field.

The main object of the invention is to provide a turbo mechanism structure that is suitable for use in big and small volume internal combustion engines, that can be used at high speeds, that enables better axial load bearing by forming an oil film layer in axial direction via its bearing, that enables reduction of friction and power loss when compared to alternative types and that provides a lower body production cost.

Another object of the invention is to provide a more efficient hydrodynamic bearing system by forming a better radial oil film.

Another object of the invention is to reduce production cost of the turbo system by reducing the number of steps in turbo body production process.

Another object of the invention is to provide support and damping to control axial and radial movement of the turbo shaft and impellers.

Another object of the invention is to reduce production cost by the single-piece structure of the turbo bearing as an alternative to turbo bearings with at least five pieces.

Another object of the invention is to provide ease of assembly and hence saving in labor by the single-piece bearing instead of complicated systems during assembly of the turbo.

Another object of the invention is to increase the efficiency of the turbo charge mechanism.

Another object of the invention is to extend the life of the turbo charge mechanism. Another object of the invention is to enable axial load bearing by developing single-piece semi-sliding bearing systems.

Another object of the invention is to increase the efficiency of the hydrodynamic bearing system developed as an alternative to mechanical ball bearings.

### BRIEF DESCRIPTION OF THE INVENTION

In order to achieve all of the above-mentioned objects that are obvious from the detailed description provided below, the present invention is related to a single-piece turbo bearing that can bear axial loads along with the radial loads, with the features of claims 1 or 6.

The first aspect of the invention is related to a turbo mechanism having a bearing structure that is a single-piece component which can bear axial loads along with radial loads and which includes compressor side film forming holes and turbine side film forming holes, internal channel, axial support ring and force support surface, comprising a single-piece bearing and body, an oil inlet feeding channel on said body, an internal oil channel under said oil inlet feeding channel to enable lubrication of the bearing, a groove which is formed by a recess on the bearing and which enables transfer of oil to the compressor side film forming holes and turbine side film forming holes on the bearing and two installation recesses on the bearing which are angled at most 179.5° relative to each other and two installation housings on the body which are angled at most 179.5° relative to each other.

Another preferred embodiment of the invention comprises the groove formed by at least one recess that lies along the external surface of the said bearing to provide transfer of oil to the external surface of the bearing.

Another preferred embodiment of the invention comprises the groove formed by at least one recess on the external surface of the bearing which is shorter than the distance between the compressor side film forming holes and the turbine side film forming holes.

Another preferred embodiment of the invention comprises the groove that facilitates formation of oil film by enabling transfer of oil received from the internal oil channel located under the oil inlet channel to the compressor side film forming holes and to the turbine side film forming holes.

Another preferred embodiment of the invention comprises two installation recesses angled 170° relative to each other which enable installation of the bearing into the bearing housing of the body such that the groove of the bearing is positioned upright. Another preferred embodiment of the invention comprises two installation housings angled 170° relative to each other which are suitable to the fixing screws that fix the bearing into the body.

Another preferred embodiment of the invention comprises single-piece axial support rings in connection with each other, at least one compressor side film forming hole and at least one turbine side film forming hole that enable formation of oil film thereon, the internal channel that lies along the force support surface which connects said compressor side film forming hole and said turbine side film forming hole to the external surface of the axial support ring, support surface recess on the force support surface and ring surface recess on the axial support ring and lubrication holes in relation with the internal channels on the axial support ring and the force support surface.

Another preferred embodiment of the invention comprises the single-piece bearing with the axial support ring which controls the axial movement of the rotor assembly and which enables axial load bearing.

Another preferred embodiment of the invention comprises at least one internal channel, inside the bearing, parallel to the axis of said bearing, between the compressor side film forming holes and the axial support ring surface which enables formation of the axial oil film.

Another preferred embodiment of the invention comprises the internal channel that connects each compressor side film forming hole to the axial support ring surface.

Another preferred embodiment of the invention comprises at least one internal channel inside the bearing, parallel to the axis of said bearing, between the force support surfaces which forms the turbine side external surface of the bearing, which enables formation of the axial oil film.

Another preferred embodiment of the invention comprises the internal channel that connects each turbine side film forming hole to the force support surface.

Another preferred embodiment of the invention comprises at least one ring surface recess on the axial support ring surface, of the oil received from the lubrication holes on the axial support ring surface.

Another preferred embodiment of the invention comprises at least one support surface recess on the force support surface, of the oil received from the lubrication holes on the force support surface.

Another preferred embodiment of the invention comprises at least one ring surface recess formed by a radial recess and at least one support surface recess formed by a radial recess.

Another preferred embodiment of the invention comprises six ring surface recesses and six support surface recesses.

Another preferred embodiment of the invention comprises the single-piece bearing having axial support ring structure, made of brass material which controls axial movement of the rotor assembly and which enables axial load bearing.

Another preferred embodiment of the invention comprises the single-piece bearing made of brass material which controls axial movement of the rotor assembly and which enables axial load bearing.

Another preferred embodiment of the invention comprises the single-piece bearing made of metal material which controls axial movement of the rotor assembly and which enables axial load bearing.

Another preferred embodiment of the invention comprises the single-piece bearing made of metal alloy material which controls axial movement of the rotor assembly and which enables axial load bearing.

Another aspect of the invention is an alternative embodiment comprising a single-piece bearing and body, an oil inlet feeding channel on said body, an internal oil channel under said oil inlet feeding channel which enables lubrication of the bearing, a recess which lies along the bearing housing and positioned between the said bearing housing and the bearing external surface and which enables transfer of oil to the compressor side film forming holes and the turbine side film forming holes of the bearing and two installation recesses on the bearing and two installation housings on the body.

Another preferred embodiment of the invention comprises a recess inside the bearing housing at bottom with the same level as the internal oil channel which facilitates formation of oil film by enabling transfer of oil received from said internal oil channel to the compressor side film forming holes and the turbine side film forming holes.

The scope of the invention is stated in the claims and it cannot be limited with what is described as an example in this brief and detailed description. It is apparent that a person skilled in the art can present similar embodiments in the light of what is described above without departing from the main scheme of the invention as described in the appended claims.

### BRIEF DESCRIPTION OF THE FIGURES

Figure 1 shows the cross-section perspective view of the bearing body.
Figure 2 shows the front view of the turbo bearing.
Figure 3 shows the perspective view of the turbo bearing.
Figure 4A shows the exploded view of the turbo bearing before assembly and Figure 4B shows the perspective view of the turbo bearing after assembly.
Figure 5A and 5B show the perspective view of the turbo bearing.
Figure 5C and 5D show two different cross-sections of the turbo bearing.

### DESCRIPTION OF REFERENCE NUMBERS IN FIGURES

- 10.: Turbo body
101. Bearing housing
102. Oil pocket
103. Assembly means
- 11.: Oil inlet feeding channel
111. Internal oil channel
- 12.: Oil discharge groove
- 20.: Compressor impeller
201. Back plate
- 30.: Turbine impeller
301. Heat shield
- 40.: Shaft
- 50.: Bearing
501. Compressor side film forming hole
502. Turbine side film forming hole
503. Internal channel
5030. Lubrication hole
504. Groove
- 51.: Axial support ring
511. Ring surface recess
512. Installation recess
- 52.: Force support surface
521. Support surface recess
- 53.: Oil drain opening
- 54.: Fixing screw
- 60.: Fixing ring

### DETAILED DESCRIPTION OF THE INVENTION

In this detailed description, **a turbo bearing system** of the invention is described by non-limiting examples in order to provide a better understanding of the subject.

The invention is specifically related to the single-piece, low-cost turbo bearing that increases the power and efficiency obtained from small cylinder engines and that can bear axial loads along with radial loads.

The invention is characterized by comprising a single-piece bearing (50) and a turbo body (10), an oil inlet feeding channel (11) on said turbo body (10), an internal oil channel (111) under said oil inlet feeding channel (11) that enables lubrication of the bearing (50), a groove (504) formed by a recess on the bearing (50) that enables transfer of oil to the compressor side film forming holes (501) and to the turbine side film forming holes (502) on the bearing (50), two installation recesses (512) on the bearing (50) that are angled at most 179.5° relative to each other and two installation housings (103) on the turbo body (10) that are angled at most 179.5° relative to each other.

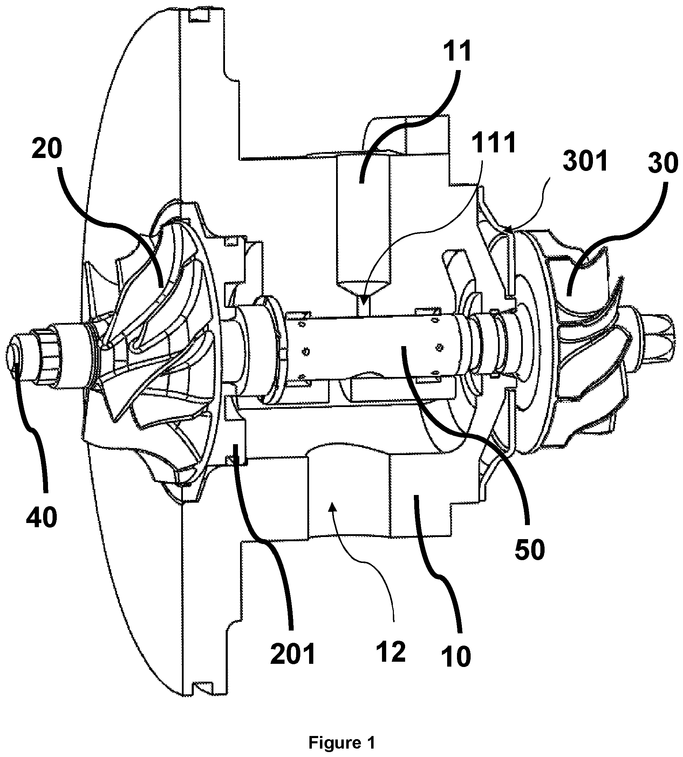

Figure 1 shows a cross-section of the perspective view of the turbo body (10). The turbine impeller (30) is connected to the rear end of the shaft (40) which passes through the bearing (50) positioned inside the turbo body (10). The compressor impeller (20) is installed on the front end of said shaft (40). The back plate (201) is located between the compressor impeller (20) and the turbo body (10).

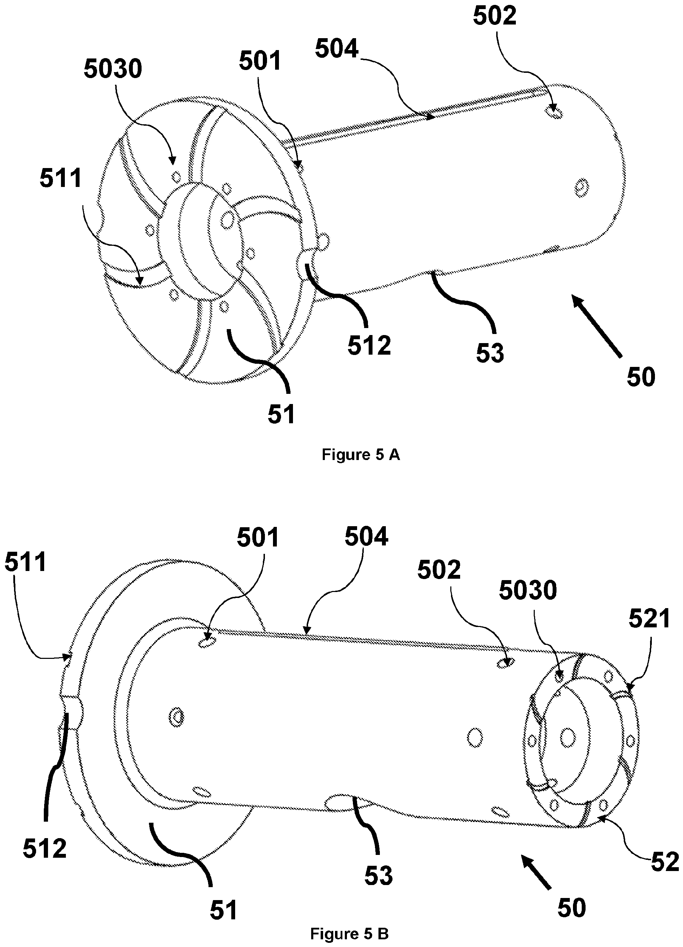

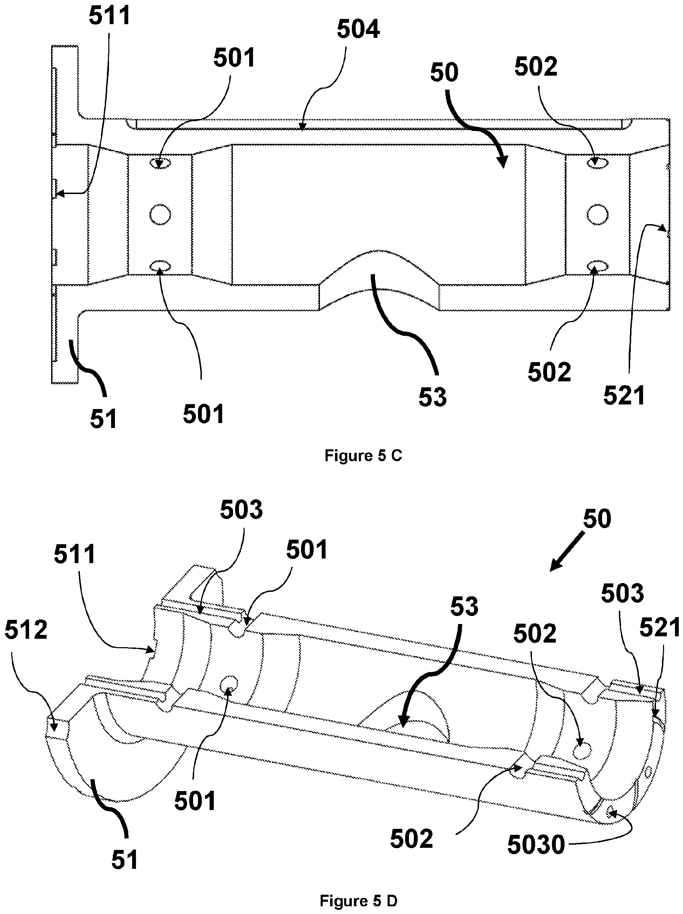

Figures 5A and 5B shows the perspective view of the turbo bearing. The turbo bearing comprises the external groove (504), turbine side film forming holes (502) and the compressor side film forming holes (501). Figure 5D shows the cross-section where the internal grooves (503) of the turbo bearing can be seen. As seen in the figures, the bearing (50) is a single-piece component and preferably made of brass material.

In the turbo system of the invention, the axial support ring (51) in connection with said bearing (50) is positioned on the compressor impeller (20) side. The axial support ring (51) is manufactured integral with the bearing (50).

There is the heat shield (301) on the back of the turbine impeller (30) which protects the turbo body (10) from the exhaust heat. Thus, the bearing (50) part of the turbo is protected from the overheating and the turbo can be operated at the desired performance.

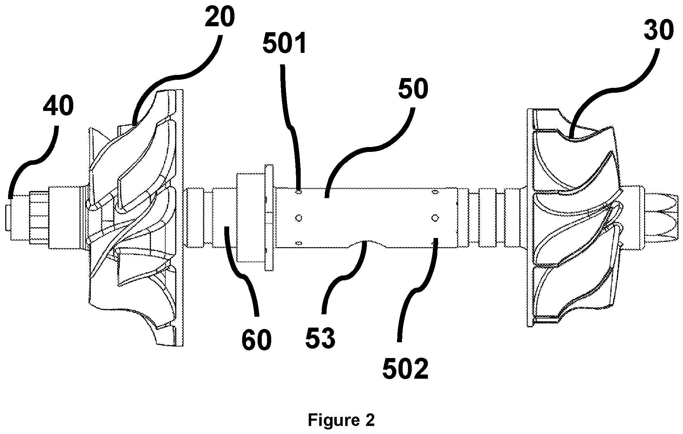

On the front side, the single-piece bearing (50) comprises the axial support ring (51), the compressor side film forming holes (501) and the turbine side film forming holes (502) which enables formation of oil film inside the bearing (50) and internal grooves (503) in connection with the compressor side film forming holes (501) and the turbine side film forming holes (502) which enable formation of axial oil film around the bearing (50). As seen in Figure 2, the fixing ring (60) is located between the compressor impeller (20) and the axial support ring (51) of the bearing (50). Thus, the predetermined spacing between the axial support ring (51) and the compressor impeller (20) mounted on the shaft (40).

The turbo system of the invention comprises the external groove (504) that is a groove form shaped by at least one recess which lies at most all along the external part of the bearing (50).

On the upper part of the turbo body (10) of the invention, the oil discharge groove (12) is located on the bottom part of the oil inlet feeding channel (11). The oil sent into the turbo body (10) enables flow of oil onto the groove (504) of the bearing (50) through the internal oil channel (111) connected to the oil inlet feeding channel (11). The oil enables transfer of oil to the compressor side film forming hole (501) and the turbine side film forming hole (502) through said groove (504). Said oil inlet feeding channel (11), oil discharge groove (12) and the internal oil channel (111) are machined by boring the turbo body (10) during production. In another preferred embodiment of the invention, in the process, the grooves and channels are manufactured by machining or by molding the turbo body (10).

The oil filled into the bearing (50) through the oil drain opening (53) of the bearing (50) is transferred to the ail discharge groove (12) over said opening. Another preferred embodiment of the invention comprises one oil drain opening (53).

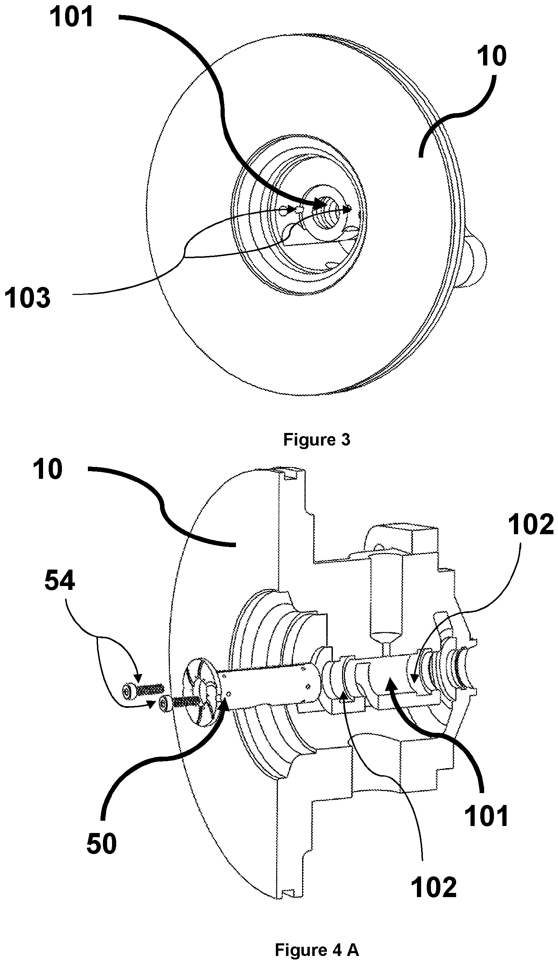

As seen in Figure 4A, the turbo body (10) comprises the bearing housing (101) suitable with the bearing (50) therein. By said bearing housing (101), the bearing (50) is fixed and lubricated inside the turbo body (10). Inside the said bearing housing (101), outside the compressor side film forming holes (501) and the turbine side film forming holes (502), there are two oil pockets (102). Said oil pockets (102) are formed by recesses shaped on the inner surface of the said bearing housing (101) around the bearing housing (101). The oil flowing onto the bearing through the compressor side oil groove (121) and the turbine side oil groove (122) enables formation of oil film around the bearing (50) of the compressor side film forming holes (501) and the turbine side film forming holes (502) that the bearing (50) has, via the oil pockets (102).

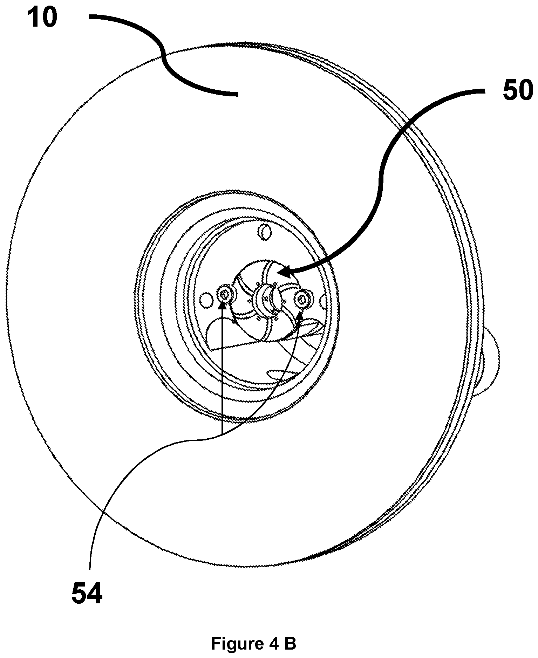

As seen in Figure 4A and Figure 4B, the bearing (50) is fixed to the bearing housing (101) inside the turbo body (10) by at least one and preferably two fixing screws (54) over the installation recess (512) of the axial support ring (51) and the assembly means (103) of the turbo body (10). During fixing, the bearing (50) is loose fixed. The bearing (50) is prevented from turning during operation of the turbo by said fixing screws (54). In the preferred embodiment of the invention, said installation recess (512) and the assembly means (103) are produced at an angle that is at most 179.5° and preferably 170° relative to each other. Thus, the faulty installation of the bearing (50) is prevented and the groove (504) of said bearing (50) is located always on the topmost position.

By driving the turbine impeller (30) of the turbo, by the compressor side film forming holes (501) and the turbine side film forming holes (502) of the bearing (50) which supports and enables the shaft (40) to rotate radially, a radially shaped oil film is formed inside said bearing (50).

Figures 5C and 5D show the cross-section of the bearing (50). As seen in the figure, the bearing (50) comprises internal channels (503) opening to the turbine side film forming holes (502) and the compressor side film forming holes (501). An axial oil film is formed around the bearing (50) by said internal channels (503). The lubrication hole (5030) structure is positioned where the internal channels (503) mentioned in Figure 5A are connected to the axial support ring (51) surface. Said lubrication hole (5030) is located on the surface for each internal channel (503). In a similar structure, there is lubrication hole (5030) on the force support surface (52) of the bearing (50) where each internal channel (503) opens to the surface.

The formed oil film provides hydrodynamic bearing and friction and power loss on the shaft (40) is minimized. Since said oil film covers the entire radial surface, the friction on the surface is minimized and bearing is performed. Thus, the high-speed turbo bearings can be realized without any problems.

By the ring surface recesses (511) of the axial support ring (51) and the support surface recesses (521) of the force support surface (52), the axial load bearing capacity of the bearing (50) is increased.

During rotation, the oil is transferred to the ring surface recesses (511) and the support surface recesses (521) through the internal channels (503) that open to the axial support ring (51) and the force support surface (52) via the lubrication holes (5030) in connection with the compressor side film forming holes (501) and the turbine side film forming holes (502).

As seen in Figure 1, the internal oil channel (111) that enables flow of oil between the bearings (50) and the oil inlet feeding channel (11) on the upper part of the turbo body (10) is located inside the turbo body (10). The oil sent into the turbo through the oil inlet feeding channel (11) is transferred onto the groove (504) formed by a recess of the bearing (50) via the internal channel (111). The oil is conveyed to the compressor side film forming holes (501) and the turbine side film forming holes (502) by said groove (504). The lubrication is performed reliably by the oil pockets (102) on the turbo body (10).

The oil film is formed on the internal surface of the bearing by the shaft (40) rotating inside the bearing (50). The radially formed oil film enables bearing of the turbo and provides support against radial forces. The transfer of oil to the axial surface is enabled by the internal channels (503) of the bearing (50). Axial load bearing capacity is increased by the ring surface recess (511) and the support surface recess (521).

Another preferred alternative embodiment of the invention comprises a single-piece bearing (50) and the turbo body (10), an oil inlet feeding channel (11) on said turbo body (10), an internal oil channel (111) on the bottom of said oil inlet feeding channel (11) which enables lubrication of the bearing (50) and the recess that is located between the bearing (50) external surface and the said bearing housing (101) which extends along the bearing housing (101) and which enables transfer of oil to the turbine side film forming holes (502) and to the compressor side film forming holes (501) on the bearing (50). By the said recess inside the turbo body (10), the oil is conveyed to the compressor side film forming holes (501) and the turbine side film forming holes (502) on the bearing (50) through the internal oil channel (111).

## Claims

1. A turbo mechanism having a single-piece bearing (50) structure with compressor side film forming holes (501) and turbine side film forming holes (502), an internal channel (503), an axial support ring (51) and a force support surface (52), which can bear axial loads along with the radial loads, wherein said mechanism comprises a single-piece bearing (50) and
a turbo body (10), an oil inlet feeding channel (11) on said turbo body (10), an internal oil channel (111) at the bottom of said oil inlet feeding channel (11) which enables lubrication of the bearing (50), **characterised in that** a groove (504) is formed by a recess
on the bearing (50) which enables transfer of oil to the compressor side film forming holes (501) and the turbine side film forming holes (502) on the external surface of the bearing (50) and which extends along the external surface of said bearing (50), two installation recesses (512) on the bearing (50) which are angled at most 179.5° relative to each other and two assembly means (103) on the turbo body (10) which are angled at most 179.5° relative to each other.

2. The turbo mechanism according to Claim 1 wherein said groove (504) is formed by at least one recess which is shorter than the distance between the compressor side film forming holes (501) and the turbine side film forming holes (502) on the external surface of the bearing (50).

3. The turbo mechanism according to Claim 1 or Claim 2 wherein the groove (504) facilitates formation of oil film by enabling transfer of oil received from the internal oil channel (111) located at the bottom part of the oil inlet feeding channel (11) to the compressor side film forming holes (501) and to the turbine side film forming holes (502).

4. The turbo mechanism according to Claim 1 wherein the two installation recesses (512) are angled 170° relative to each other and enable installation of the bearing (50) to the bearing housing (101) of the turbo body (10) such that the groove (504) of the bearing (50) is mounted upright.

5. The turbo mechanism according to Claim 1 wherein the two assembly means (103) are angled 170° relative to each other and are suitable with the fixing screws (54) that fix the bearing (50) to the turbo body (10).

6. A turbo mechanism having a single-piece bearing (50) structure with compressor side film forming holes (501) and turbine side film forming holes (502), an internal channel (503), an axial support ring (51) and a force support surface (52) which can bear axial loads along with the radial loads, wherein said mechanism comprises a single-piece bearing (50), a turbo body (10) and a bearing housing (101), an oil inlet feeding channel (11) on said turbo body (10) and an internal oil channel (111) at the bottom part of said oil inlet feeding channel (11) which enables lubrication of the bearing (50), said mechanism comprising further two installation recesses (512) positioned on the axial support ring (51) and two assembly means (103) positioned on the turbo turbo body (10), the turbo mechanism being **characterised by** a recess inside the turbo body, which is positioned between bearing housing (101) and the bearing (50) and which extends along the bearing housing (101) and which enables transfer of oil to the compressor side film forming holes (501) and the turbine side film forming holes (502) on the external surface of the bearing (50).

7. Turbo mechanism according to Claim 6 wherein the recess is positioned inside the bearing housing (101) at the bottom side at the same level as the internal oil channel (111) which facilitates formation of oil film by enabling transfer of oil received from said internal oil channel (111) to the compressor side film forming holes (501) and to the turbine side film forming holes (502).

## Patentansprüche

1. Ein Turbomechanismus mit einer einteiligen Lagerstruktur (50) mit verdichterseitigen Filmbildungslöchern (501) und turbinenseitigen Filmbildungslöchern (502), einem inneren Kanal (503), einem axialen Stützring (51) und einer Kraftstützfläche (52), die axiale Lasten zusammen mit den radialen Lasten tragen kann, wobei der Mechanismus ein einteiliges Lager (50) und einen Turbokörper (10), einen Öleinlasszuführungskanal (11) an dem Turbokörper (10), einen inneren Ölkanal (111) am Boden des Öleinlasszuführungskanals (11), der die Schmierung des Lagers (50) ermöglicht, umfasst, **dadurch gekennzeichnet, dass**
eine Nut (504) durch eine Ausnehmung an dem Lager (50) gebildet wird, die die Übertragung von Öl zu den verdichterseitigen Filmbildungslöchern (501) und den turbinenseitigen Filmbildungslöchern (502) an der Außenfläche des Lagers (50) ermöglicht und die sich entlang der Außenfläche des Lagers (50) erstreckt, zwei Installationsaussparungen (512) an dem Lager (50), die in einem Winkel von höchstens 179.5° zueinander stehen, und zwei Montagemittel (103) an dem Turbokörper (10), die in einem Winkel von höchstens 179.5° zueinander stehen.

2. Der Turbomechanismus nach Anspruch 1, wobei die Nut (504) durch mindestens eine Aussparung gebildet wird, die kürzer ist als der Abstand zwischen den verdichterseitigen Filmbildungslöchern (501) und den turbinenseitigen Filmbildungslöchern (502) an der Außenfläche des Lagers (50).

3. Der Turbomechanismus nach Anspruch 1 oder Anspruch 2, wobei die Nut (504) die Bildung eines Ölfilms erleichtert, indem sie die Übertragung von Öl, das von dem inneren Ölkanal (111), der sich am unteren Teil des Öleinlasszuführkanals (11) befindet, aufgenommen wird, zu den verdichterseitigen Filmbildungslöchern (501) und zu den turbinenseitigen Filmbildungslöchern (502) ermöglicht.

4. Der Turbomechanismus nach Anspruch 1, wobei die beiden Installationsaussparungen (512) um 170° zueinander abgewinkelt sind und den Einbau des Lagers (50) in das Lagergehäuse (101) des Turbokörpers (10) ermöglichen, so dass die Nut (504) des Lagers (50) aufrecht montiert ist.

5. Der Turbomechanismus nach Anspruch 1, wobei die beiden Montagemittel (103) um 170° zueinander abgewinkelt sind und zu den Befestigungsschrauben (54) passen, die das Lager (50) am Turbokörper (10) befestigen.

6. Der Turbomechanismus mit einer einteiligen Lager- (50) Struktur mit verdichterseitigen Filmbildungslöchern (501) und turbinenseitigen Filmbildungslöchern (502), einem inneren Kanal (503), einem axialen Stützring (51) und einer Kraftstützfläche (52), die axialen Lasten zusammen mit den radialen Lasten tragen kann, wobei der Mechanismus ein einteiliges Lager (50), einen Turbokörper (10) und ein Lagergehäuse (101) umfasst, einen Öleinlasszuführungskanal (11) an dem Turbokörper (10) und einen inneren Ölkanal (111) an dem unteren Teil des Öleinlasszuführungskanals (11), der die Schmierung des Lagers (50) ermöglicht, wobei der Mechanismus ferner zwei Installationsaussparungen (512), die an dem axialen Stützring (51) positioniert sind, und zwei Montagemittel (103), die an dem Turbokörper (10) positioniert sind, umfasst, wobei der Turbomechanismus **gekennzeichnet ist durch** eine Aussparung innerhalb des Turbokörpers, die zwischen dem Lagergehäuse (101) und dem Lager (50) angeordnet ist und die sich entlang des Lagergehäuses (101) erstreckt und die den Transfer von Öl zu den verdichterseitigen Filmbildungslöchern (501) und den turbinenseitigen Filmbildungslöchern (502) auf der Außenfläche des Lagers (50) ermöglicht.

7. Der Turbomechanismus nach Anspruch 6, bei dem die Aussparung innerhalb des Lagergehäuses (101) an der Unterseite auf der gleichen Höhe wie der innere Ölkanal (111) angeordnet ist, was die Bildung eines Ölfilms erleichtert, indem es den Transfer des vom inneren Ölkanal (111) aufgenommenen Öls zu den verdichterseitigen Filmbildungslöchern (501) und zu den turbinenseitigen Filmbildungslöchern (502) ermöglicht.

## Revendications

1. Mécanisme de turbo ayant une structure de palier monobloc (50) avec des trous de formation de film côté compresseur (501) et des trous de formation de film côté turbine (502), un canal interne (503), une bague de support axial (51) et une surface de support de force (52), qui peut supporter des charges axiales en même temps que les charges radiales, dans lequel ledit mécanisme comprend un palier monobloc (50) et un corps de turbo (10), un canal d'alimentation en huile (11) sur ledit corps de turbo (10), un canal d'huile interne (111) au fond dudit canal d'alimentation en huile (11) qui permet la lubrification du palier (50), **caractérisé en ce qu'**une rainure (504) est formée par un évidement sur le palier (50) qui permet le transfert d'huile vers les trous de formation de film côté compresseur (501) et les trous de formation de film côté turbine (502) sur la surface externe du palier (50) et qui s'étend le long de la surface externe dudit palier (50), deux évidements de montage (512) sur le palier (50) qui sont inclinés au maximum de 179.5° l'un par rapport à l'autre et deux moyens d'assemblage (103) sur le corps de turbo (10) qui sont inclinés au maximum de 179.5° l'un par rapport à l'autre.

2. Mécanisme de turbo selon la revendication 1, dans lequel ladite rainure (504) est formée par au moins un évidement qui est plus court que la distance entre les trous de formation de film côté compresseur (501) et les trous de formation de film côté turbine (502) sur la surface externe du palier (50).

3. Mécanisme de turbo selon la revendication 1 ou la revendication 2, dans lequel la rainure (504) facilite la formation d'un film d'huile en permettant le transfert de l'huile reçue du canal d'huile interne (111) situé à la partie inférieure du canal d'alimentation d'entrée d'huile (11) vers les trous de formation de film côté compresseur (501) et vers les trous de formation de film côté turbine (502).

4. Mécanisme de turbo selon la revendication 1, dans lequel les deux évidements d'installation (512) sont inclinés de 170° l'un par rapport à l'autre et permettent l'installation du palier (50) sur le logement de palier (101) du corps de turbo (10) de sorte que la rainure (504) du palier (50) est montée verticalement.

5. Mécanisme de turbo selon la revendication 1, dans lequel les deux moyens d'assemblage (103) sont inclinés de 170° l'un par rapport à l'autre et sont adaptés aux vis de fixation (54) qui fixent le palier (50) au corps de turbo (10).

6. Mécanisme de turbo ayant une structure de palier monobloc (50) avec des trous de formation de film côté compresseur (501) et des trous de formation de film côté turbine (502), un canal interne (503), une bague de support axial (51) et une surface de support de force (52), qui peut supporter des charges axiales en même temps que les charges radiales, dans lequel ledit mécanisme comprend un palier monobloc (50), un corps de turbo (10) et un logement de palier (101), un canal d'alimentation en huile (11) sur ledit corps de turbo (10) et un canal d'huile interne (111) au fond dudit canal d'alimentation en huile (11) qui permet la lubrification du palier (50), ledit mécanisme comprenant en outre deux évidements d'installation (512) positionnés sur le bague de support axial (51) et deux moyens d'assemblage (103) positionnés sur le corps de turbo (10), le mécanisme de turbo étant **caractérisé par** un évidement à l'intérieur du corps de turbo, qui est positionné entre le logement de palier (101) et le palier (50) et qui s'étend le long du logement de palier (101) et qui permet le transfert d'huile vers les trous de formation de film côté compresseur (501) et les trous de formation de film côté turbine (502) sur la surface externe du palier (50).

7. Mécanisme de turbo selon la revendication 6, dans lequel l'évidement est positionné à l'intérieur du logement de palier (101) du côté inférieur au même niveau que le canal d'huile interne (111) qui facilite la formation d'un film d'huile en permettant le transfert de l'huile reçue dudit canal d'huile interne (111) vers les trous de formation de film côté compresseur (501) et vers les trous de formation de film côté turbine (502).
